# EUROPEAN PATENT SPECIFICATION

(11) **EP 4 068 834 B1**
(45) Date of publication and mention of the grant of the patent: **01.01.2025**
(21) Application number: 20896614.3
(22) Date of filing: 30.11.2020
(51) Int. Cl.: H04W 12/30, H04W 12/037, H04W 12/0431, H04W 12/06, H04W 12/106, H04L 9/08, H04L 9/32, H04L 9/40, H04W 4/40

(54) **INITIAL SECURITY CONFIGURATION METHOD, SECURITY MODULE, AND TERMINAL**
VERFAHREN ZUR ANFÄNGLICHEN SICHERHEITSKONFIGURATION, SICHERHEITSMODUL UND ENDGERÄT
PROCÉDÉ DE CONFIGURATION DE SÉCURITÉ INITIALE, MODULE DE SÉCURITÉ ET TERMINAL

(30) Priority: 03.12.2019 CN 201911218999
(43) Date of publication of application: 05.10.2022
(73) Proprietor: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: TIAN, Ye, Beijing 100032 (CN); REN, Xiaoming, Beijing 100032 (CN)
(74) Representative: Novagraaf Technologies
(86) International application number: PCT/CN2020/132649
(87) International publication number: WO 2021/109963

(56) References cited:
- WO-A1-2009/046400
- CN-A- 102 457 844
- CN-A- 102 752 773
- US-A1- 2011 320 802
- "3rd Generation Partnership Project; Technical Specification Group Services and System Aspects; Generic Authentication Architecture (GAA); Generic Bootstrapping Architecture (GBA) (Release 16)", vol. SA WG3, no. V16.0.0, 25 September 2019 (2019-09-25), pages 1 - 93, XP051784880, Retrieved from the Internet <URL:ftp://ftp.3gpp.org/Specs/archive/33_series/33.220/33220-g00.zip 33220-g00.doc> [retrieved on 20190925]
- "3rd Generation Partnership Project; Technical Specification Group Services and System Aspects; Key establishment between a Universal Integrated Circuit Card (UICC) and a terminal (Release 15)", 3GPP STANDARD; TECHNICAL SPECIFICATION; 3GPP TS 33.110, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V15.0.0, 22 June 2018 (2018-06-22), pages 1 - 27, XP051473859
- 3GPP 3GPP: "3rd Generation Partnership Project; Technical Specification Group Services and System Aspects; Study on security aspects for LTE support of Vehicle-to- Everything (V2X) services (Release 14)", 1 September 2017 (2017-09-01), pages 1 - 77, XP055548405, Retrieved from the Internet <URL:http://www.3gpp.org/ftp/TSG_SA/WG3_Security/TSGS3_88_Dali/SA_77/33885-e10.doc> [retrieved on 20190128]
- WANG WENQIANG, CUI YUANYUAN: "Security Framework of Mobile Value-added Service", TELECOMMUNICATIONS NETWORK TECHNOLOGY, vol. 2, no. 2, 1 January 2010 (2010-01-01), pages 28 - 34, XP055818850

## Description

### CROSS-REFERENCE TO RELATED APPLICATION

The present application claims priority to Chinese patent application No. 201911218999.6, filed on December 03, 2019.

### TECHNICAL FIELD

The present disclosure relates to the technical field of Internet of Vehicles (IoV), and in particular to an initial security provisioning method, a security module, and a terminal device.

### BACKGROUND

Because initialization of a Vehicle-to-Everything (V2X) terminal device involves generation of a cryptographic public and private key pair of a terminal device and application of an Enrollment Certificate (EC) of a device, the initial security provisioning scheme in the related art has high requirements on safety production of automobile manufacturers and V2X terminal device manufacturers, and enterprises have to invest a lot of time, money and energy to rebuild production lines and train employees to meet the requirements for safety production compliance, safety audit, management and control of safety cost and other aspects.

At present, foreign auto brands have the ability to produce safely on the production lines, and can realize the initial security provisioning of an On board Unit (OBU) through the manner of filling on production line. However, most of Chinese domestic auto brands do not have a secure production environment to realize the initial configuration of sensitive parameters such as a key, a certificate and the like. If the manner of filling on production line is also used, large cost will be brought to the enterprises, so a simpler and easier security solution needs to be found.

A solution based on a Generic Bootstrapping Architecture (GBA) that is proposed by the 5GAA can avoid using the manner of filling on production line to realize the initial security provisioning of the V2X terminal device, thereby reducing the cost of rebuilding the production lines of the enterprises. However, the 5GAA only puts forward an idea, but does not provide a process and method for realizing the initial security provisioning, and thus it is impossible to guide the production practice of the V2X terminal device. In addition, a Transport Layer Security (TLS) secure channel established in the solution ends in a Hardware Security Module (HSM) on the V2X terminal device side, and does not end in a Universal Subscriber Identity Module (USIM) that generates one or more GBA session keys Ks_NAF, which results in security risks of leakage of the one or more session keys or data information.

WO 2009/046400A1 provides a method by which a UMTS integrated circuit card (UICC) exchanges information with a terminal, enables a procedure where multiple keys specific to application and NAPs (Ks_local) are used for authentication and to encrypt and decrypt messages.

### SUMMARY

The invention is set out in the appended set of claims. Embodiments of the present disclosure provide an initial security provisioning method, a security module and a terminal device to solve the problem in the related art that the reliability of message transmission and the information security of initial security provisioning cannot be guaranteed because there is no specific scheme for the initial security provisioning of a V2X terminal device defined in the 5GAA.

To solve the above problem, the embodiments of the present disclosure provide an initial security provisioning method according to claim 1. Optional features are set out in dependent claims 2 to 5.

The embodiments of the present disclosure also provide an initial security provisioning method according to claim 6. Optional features are set out in dependent claims 7 to 8.

The embodiments of the present disclosure also provide a security module according to claim 9.

The embodiments of the present disclosure also provide a terminal device according to claim 10.

The embodiments of the present disclosure also provide a computer-readable storage medium according to claim 11.

The present disclosure has the following beneficial effects.

Through the above solution, when a public key certificate is applied, the security module capable of implementing the function of the USIM performs encryption and/or integrity protection on the certificate application request message, so that the information security of initial security provisioning can be guaranteed, and the security of message transmission can be improved.

### BRIEF DESCRIPTION OF THE DRAWINGS

FIG. 1 is a schematic diagram of an autonomous mode of off-line filling of a production line.
FIG. 2 is a schematic diagram of a Device Configuration Manager (DCM) agent mode of off-line filling of a production line.
FIG. 3 is a schematic diagram of a GBA.
FIG. 4 is a first flowchart of an initial security provisioning method according to an embodiment of the present disclosure.
FIG. 5 is an architecture diagram of a V2X terminal device according to an embodiment of the present disclosure.
FIG. 6 is a flowchart of initial security provisioning of a V2X terminal device according to an embodiment of the present disclosure.
FIG. 7 is a schematic diagram of modules of a security module according to an embodiment of the present disclosure.
FIG. 8 is a second flowchart of an initial security provisioning method according to an embodiment of the present disclosure.
FIG. 9 is a schematic diagram of modules of a terminal device according to an embodiment of the present disclosure.
FIG. 10 is a third flowchart of an initial security provisioning method according to an embodiment of the present disclosure.
FIG. 11 is a schematic diagram of modules of a CA server according to an embodiment of the present disclosure.
FIG. 12 is a fourth flowchart of an initial security provisioning method according to an embodiment of the present disclosure.
FIG. 13 is a schematic diagram of modules of a network element according to an embodiment of the present disclosure.

### DETAILED DESCRIPTION

The technologies related to the embodiments of the present disclosure are briefly introduced as follows.

At present, off-line filling of a production line is a primary method for realizing initial security provisioning of V2X terminal devices (including an OBU, a Road Side Unit (RSU), etc.), which can perform initial configuration to an HSM of the devices. An initial configuration process of the OBU device before an automobile with a V2X function comes off a production line is taken as an example. Other types of V2X terminal devices also have the similar process.

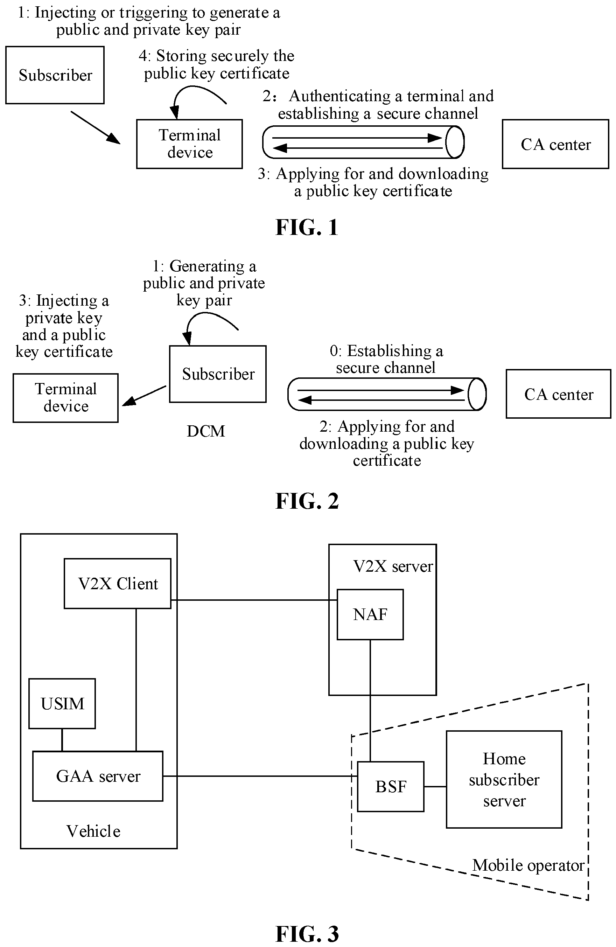

According to different implementation methods, the off-line filling of production line has an autonomous mode and a DCM agent mode. The processes are shown in FIG. 1 and FIG. 2, respectively.

In the autonomous mode, a production line worker triggers, through an external device, the HSM of the OBU device to generate a cryptographic public and private key pair, or injects a cryptographic public and private key pair generated by an external cryptographic device into the HSM. At the same time, the production line injects address information and one or more digital certificates of an Enrollment Certificate Authority (ECA) server into the HSM. Then, the production line worker triggers the OBU device to access the ECA server. The OBU device uses the one or more digital certificates of the ECA server to authenticate its identity and establishes a secure communication channel between the OBU device and the ECA server. Finally, under the protection of the secure channel, the OBU device uploads a cryptographic public key(s) to the ECA server, applies for and downloads a digital EC, and stores the digital EC securely in the HSM.

The working principle of the DCM agent mode is basically the same as that of the autonomous mode, but the implementation process is different. In the DCM agent mode, the production line needs to deploy a DCM agent node, and performs mutual authentication with the ECA server in advance to establish the secure communication channel, and provides uniform services for all vehicles coming off the production line. In the process of initial security provisioning, the DCM generates the cryptographic public and private key pair for the OBU device and interacts with the ECA server instead of the OBU device to apply for and download the digital EC. Finally, the DCM securely injects the generated cryptographic public and private key pair, the obtained digital EC, and the certificate and address information of the ECA server into the HSM of the OBU, thereby completing the initial security provisioning of the OBU device.

The 5GAA proposes an initial security provisioning method for a V2X terminal device based on a GBA technology in the research report "Efficient Provisioning System Simplifications". In the method, a USIM and its code numbers (such as International Mobile Subscriber Identification Number (IMSI), Mobile Station International Subscriber Directory Number (MSISDN) and Integrate Circuit Card Identity (ICCID)) are used as the identity of the V2X terminal device at the initial time to represent the identity of the device. Based on the USIM, the V2X terminal device can access an operator network, perform bidirectional authentication and key agreement with the network through an Authentication and Key Agreement (AKA) mechanism, and generate and provide one or more shared session keys Ks_NAF for applications. Finally, secure transmission channels, such as a TLS secure channel, can be established between the V2X device and the ECA server.

FIG. 3 provides a GBA, which consists of the following parts.

A11, software providing GBA capability support on the V2X terminal device, namely a GAA server.

A12, V2X client software on the V2X terminal device and having a software interface with the GAA server.

A13, USIM communicating with the GAA server.

A14, Network Application Function (NAF) software in the ECA server.

A15, a Bootstrapping Server Function (BSF) core network element.

Based on the security authentication method of network GBA, the V2X terminal device may use a root key(s) in the USIM card to perform bidirectional identity authentication with a mobile cellular network through the AKA mechanism, and agree with the BSF to generate one or more shared session keys Ks_NAF. Then, when receiving a certificate application request from the V2X terminal device, the ECA server may interact with the BSF to obtain the one or more session keys Ks_NAF, and authenticate the identity of the V2X terminal device based on the Ks_NAF. After the identity authentication is approved, the ECA server accepts the EC certificate application request of the V2X terminal device and issues the digital EC to the V2X terminal device upon approval. IN the above process, application layer information interaction between the ECA server and the V2X terminal device is performed in a secure channel established based on the one or more shared session keys Ks_NAF, so the security of message transmission can be guaranteed.

In the above solution based on the GBA, the USIM is used as the initial identity of the V2X terminal device, and the secure channel between the V2X terminal device and the ECA server can be established through the mobile cellular network without pre-configuring any security credentials (such as one or more X.509 digital certificates), to complete the initial configuration of the device online. In the solution, operations and interactions related to the initial security provisioning are performed by the V2X terminal device itself without the need of relying on the secure environment of the production line to ensure the security of configuration operations as in the off-line filing mode, thus greatly reducing the cost of upgrading the production line of enterprises.

In addition, the method can be applied to a scenario where the place of automobile production and the place of automobile sales are not in the same region. Through the network configuration, an on-board OBU terminal device is allowed to access the ECA server at the place where the automobile is sold and used, thereby solving the problem of determining the place of the ECA server whose one or more X.509 digital certificates are pre-configured for the on-board OBU terminal device in an automobile production process.

In the process of identity authentication and establishment of a secure channel, the code number in the USIM may be used as the unique identity of the V2X device, which avoids the situation where the identity of the V2X terminal device is not authenticated and the V2X terminal device cannot be authenticated only based on the one or more X.509 digital certificates of the ECA server.

For the problem in the related art that the security of the one or more session keys or data information cannot be guaranteed because there is no specific scheme for the initial security provisioning of a V2X terminal device defined in the 5GAA, the present disclosure provides an initial security provisioning method, a security module and a terminal device.

For making the purpose, technical solutions and advantages of the present disclosure clearer, the present disclosure is described in details below in combination with the accompanying drawings and specific embodiments.

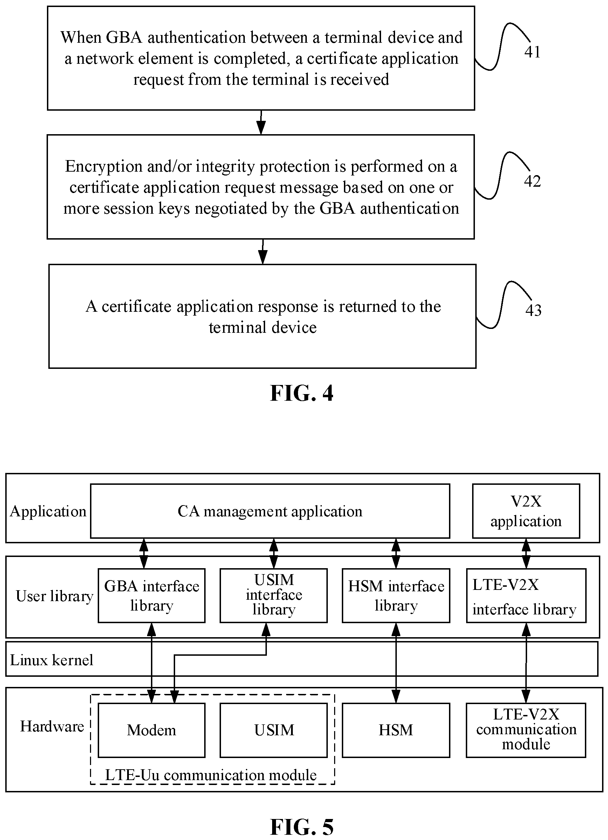

As shown in FIG. 4, the initial security provisioning method of the embodiments of the present disclosure is applicable to a security module, and may include the following operations.

At 41, when GBA authentication between a terminal device and a network element is completed, a certificate application request from the terminal device is received. The certificate application request carries identification information of the terminal device.

It is to be noted that the security module in the embodiments of the present disclosure is configured to realize the function of the USIM, that is, when the security module only realizes the function of the USIM, the security module is the USIM. Optionally, when the security module is also configured to realize the functions of the USIM and the HSM, it is indicated that the USIM and the HSM are integrated in the terminal device, and it may also be understood that the terminal device has the HSM that can realize the function of the USIM.

It is to be noted that before the terminal device sends the certificate application request to the security module, the security module has negotiated with the BSF of the network side one or more shared session keys (Ks_NAF) for the terminal device and the CA server (for example, the ECA server) to use in an application layer. The one or more session keys are negotiated through a GBA authentication process.

At 42, encryption and/or integrity protection is performed on a certificate application request message based on one or more session keys negotiated by the GBA authentication.

It is to be noted that when receiving the certificate application request, the security module needs to generate, according to the certificate application request, a public and private key pair for the certificate application firstly, and then construct a certificate application request message. Specifically, the certificate application request message includes a public key for the certificate application. That is, the security module generates the public and private key pair, and uses the public key(s) for the certificate application to construct the certificate application request message.

Specifically, the operation in 42 is implemented as follows.

When one or more first keys are successfully generated based on the one or more session keys, encryption and/or integrity protection is performed on the certificate application request message with the one or more first keys.

Alternatively, when the one or more first keys are not generated based on the one or more session keys, encryption and/or integrity protection is performed on the certificate application request message with the one or more session keys.

The one or more first keys include one or more encryption keys and/or one or more integrity protection keys.

It is to be noted that when generating the one or more first keys based on the one or more session keys, the security module generates one or more encryption keys and/or one or more integrity protection keys based on the one or more session keys. For example, when only the one or more encryption keys are generated, encryption protection is performed on the certificate application request message; when only the one or more integrity protection keys are generated, integrity protection is performed on the certificate application request message; when the one or more encryption keys and the one or more integrity protection keys are generated, encryption and integrity protection are performed on the certificate application request message. If the security module does not generate the encryption key(s) and the integrity protection key(s), the security module uses the one or more session keys to perform encryption and integrity protection on the certificate application request message. It is also to be noted that the encryption and integrity protection mode on the security module side is the same as that on the CA server side; that is, when the security module uses the one or more encryption keys to perform encryption protection on the certificate application request message, the CA server also uses the one or more encryption keys to perform encryption protection on the certificate application response message; when the security module uses the one or more integrity protection keys to perform integrity protection on the certificate application request message, the CA server also uses the one or more integrity protection keys to perform integrity protection on the certificate application response message; when the security module uses the one or more encryption keys and the one or more integrity protection keys to perform encryption and integrity protection on the certificate application request message, the CA server also uses the one or more encryption keys and the one or more integrity protection keys to perform encryption and integrity protection on the certificate application response message; when the security module uses the one or more session keys to perform encryption and integrity protection on the certificate application request message, the CA server also uses the one or more session keys to perform encryption and integrity protection on the certificate application response message. The mode in which the security module and the CA server use to perform encryption and/or integrity protection is predetermined and known to the security module and the CA server.

At 43, a certificate application response is returned to the terminal device.

Specifically, the certificate application response carries the certificate application request message protected by encryption and/or integrity protection.

Further, after the security module returns the certificate application response to the terminal device, the terminal device needs to send a certificate application message to the CA server, and the certificate application message carries the certificate application request messages subjected to the encryption and/or integrity protection. The CA server obtains the one or more session keys and user information from the network element according to the certificate application request message, and verifies and decrypts the certificate application request message with the one or more session keys; generates the certificate application response message, performs encryption and/or integrity protection on the certificate application response message with the one or more session keys, and sends a certificate response message to the terminal device. The certificate response message carries the certificate application response message protected by encryption and/or integrity protection. The terminal device receives the certificate response message returned by the CA server, and sends a certificate storing request to the security module. The certificate storing request carries the certificate application response message protected by encryption and/or integrity protection, and the certificate application response message carries one or more digital certificates. The security module receives the certificate storing request sent by the terminal device, and stores the one or more digital certificates according to the certificate application response message.

Specifically, the security module stores the one or more digital certificates according to the certificate application response message in the following mode. When the one or more first keys are generated based on the one or more session keys negotiated by GBA authentication, the certificate application response message is verified and decrypted with the one or more first keys; and the one or more digital certificates in the certificate application response message are parsed and stored.

It is to be noted that when the one or more first keys are not generated based on the one or more session keys, the certificate application response message is verified and decrypted with the one or more session keys, and the one or more digital certificates in the certificate application response message are parsed and stored.

After storing the one or more digital certificates, the security module returns a certificate write response to the terminal device.

It is to be noted that the embodiment may be used for the EC application, and may also be used for the Pseudonym Certificate (PC) application. When the one or more digital certificates are one or more ECs, the CA server is the ECA server. When the one or more digital certificates are one or more PCs, the CA server is the PCA server.

It is to be noted that the embodiments of the present disclosure mainly involve an interaction process among the terminal device, the security module and the CA server. The terminal device refers to the V2X terminal device, which may be an OBU, an RSU, and a wearable device for pedestrian, etc.

FIG. 5 provides an architecture of the V2X terminal device. An LTE-Uu communication module, an LTE-V2X communication module and a Hardware Security Module (HSM) are illustrated as separate modules or components, that is, the security module is the USIM. In the future, these modules may be packaged and integrated as a module, but this will not affect the division of their logical functions.

In the architecture, CA management application is control software for the V2X terminal device to achieve the initial security one-click configuration, and is responsible for logical control of the whole service flow. V2X application is a service application module for the V2X terminal device to achieve V2X direct communication through a PC5/V5 interface, and is responsible for control of sending and receiving a direct communication service message. The V2X application calls a LTE-V2X interface library to access an underlying LTE-V2X communication module, and achieves V2X service interaction with other V2X terminal devices.

A GBA interface library, a USIM interface library and an HSM interface library are calling interfaces opened by underlying hardware modules of the terminal device to upper applications, which are respectively used for calling the GBA security access authentication capability supported by the LTE-Uu communication module, the digital certificate management application capability and security capability provided by the USIM, and secure storage and computing capability provided by the HSM.

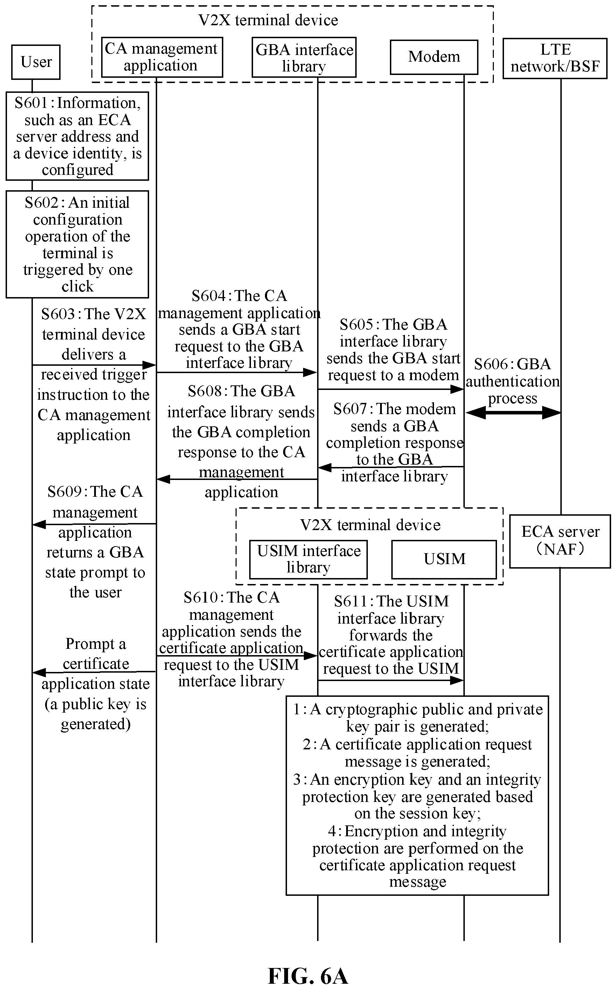

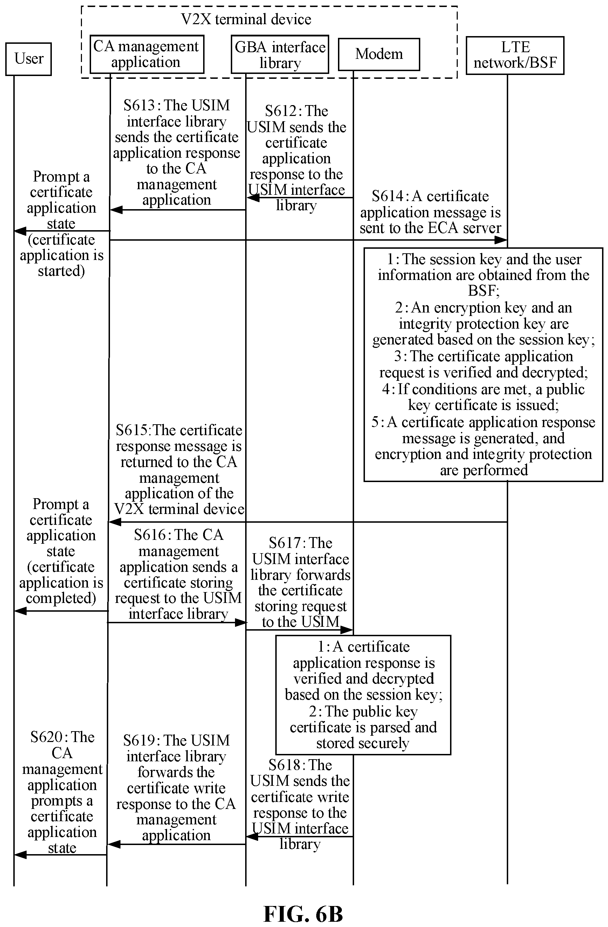

Taking that the security module is the USIM as an example, as shown in FIG. 6, an initial security provisioning process of the V2X terminal device in the embodiments of the present disclosure is as follows.

At S601, information, such as an ECA server address and a device identity, is configured.

It is to be noted that when it is needed to perform initial security provisioning on the V2X terminal device, a user may configure the selected ECA server address information and the device identity information (e.g., a Vehicle Identification Number (VIN)) to the V2X terminal device through the interfaces (such as a man-machine interface, an On-Board Diagnostics (OBD) interface or other wired or wireless interfaces) provided by the terminal device.

It is to be noted that the term "user" refers to a party for performing security provisioning of the V2X terminal device, which may be a vehicle manufacturer, a V2X terminal device supplier, or individual user, depending on production processes and application scenarios.

At S602, an initial configuration operation of the terminal device is triggered by one click.

The terminal device is triggered to initiate the initial security provisioning process through the interface provided by the terminal device. If the interface is a man-machine interface, the user may input the ECA server address information and the device identity information through a touch screen and trigger by pressing a button to start "one-click configuration".

At S603, the V2X terminal device delivers a received trigger instruction to the CA management application.

At S604, the CA management application sends a GBA start request to the GBA interface library.

At S605, the GBA interface library sends the GBA start request to a modem.

It is to be noted that the CA management application calls the underlying modem device through the GBA interface library to start the GBA authentication process, and starts to establish a secure access connection to the ECA server. At the same time, the CA management application returns a state prompt of "GBA start" to the user.

At S606, the underlying modem of the V2X terminal device interacts with the network, and performs the standard GBA authentication process according to the specification "Generic Bootstrapping Architecture" of 3GPP TS 33.220.

At S607, the modem sends a GBA completion response to the GBA interface library.

At S608, the GBA interface library sends the GBA completion response to the CA management application.

At S609, the CA management application returns a GBA state prompt to the user.

That is, after the GBA authentication process ends, the CA management application receives response information from the underlying device and returns a state prompt about whether the GBA authentication process is successful to the user.

After the GBA security authentication is completed, the USIM and the BSF of the network side have negotiated the one or more shared session keys Ks_NAF for the V2X terminal device and the ECA server to use in the application layer.

At S610, the CA management application sends the certificate application request to the USIM interface library.

At S611, the USIM interface library forwards the certificate application request to the USIM.

That is, the CA management application initiates, through the USIM interface library, the certificate application request to the USIM to apply for an ECA certificate, and the certificate application request carries the required device identity information.

After receiving the certificate application request message, the USIM performs the following operations.

First, a cryptographic public and private key pair required for applying for a digital EC is generated.

Second, the certificate application request message is constructed according to a protocol format required by the ECA server. The certificate application request message includes the generated public key(s) of the EC.

Third, as needed, the one or more session keys Ks_NAFe and Ks_NAFi respectively used for encryption and integrity protection are generated based on the one or more session keys Ks_NAF.

Fourth, encryption and integrity protection are performed on the certificate application request message with the one or more encryption keys Ks_NAFe and the one or more integrity protection keys Ks_NAFi.

It is to be noted that if the one or more encryption keys and the one or more integrity protection keys are not generated separately, the one or more session keys Ks_NAF are used to perform encryption and integrity protection on the message.

At S612, the USIM sends the certificate application response to the USIM interface library.

At S613, the USIM interface library sends the certificate application response to the CA management application.

It is to be noted that after encryption and integrity protection are performed on the certificate application request, the USIM returns the certificate application response to the CA management application through the USIM interface library, and the certificate application response includes the certificate application request message protected by cryptographic operations.

At S614, after receiving the response from the USIM, the CA management application constructs the certificate application message and sends the certificate application message to the ECA server. The certificate application message includes the protected certificate application request message returned by the USIM.

At the same time, the CA management application returns a sate of "certificate application start" to the user to prompt that the EC is being applied for.

When the V2X terminal device accesses the ECA server for the first time, the V2X terminal device and the ECA server may perform identity authentication based on the one or more shared session keys Ks_NAF generated through negotiation, for example, by means of HTTP Digest. After the authentication succeeds, the CA management application sends the certificate application message to the ECA server.

After receiving the certificate application request message, the ECA server performs the following operations.

First, the ECA server interacts with the BSF through a secure channel established in advance, and obtains the Ks_NAF and the user information related to the USIM from the BSF.

Second, as needed, the one or more session keys Ks_NAFe and Ks_NAFi respectively used for encryption and integrity protection are generated based on the one or more session keys Ks_NAF.

Third, decryption and integrity verification are performed on the certificate application request message using the one or more encryption keys Ks_NAFe and the one or more integrity protection keys Ks_NAFi. If the one or more encryption keys and the one or more integrity protection keys are not generated separately, the one or more session keys Ks_NAF are used to perform decryption and integrity verification on the message.

Fourth, the ECA server checks the certificate request and issues the digital EC for the V2X terminal device if conditions are met.

Fifth, the ECA server generates the certificate application response message and performs encryption and integrity protection on the message using the one or more encryption keys Ks_NAFe and the one or more integrity protection keys Ks_NAFi. If the one or more encryption keys and the one or more integrity protection keys are not generated separately, the one or more session keys Ks_NAF are used to perform encryption and integrity protection on the message.

At S615, the ECA server returns the certificate response message to the CA management application of the V2X terminal device.

The certificate response message includes the protected certificate application response message.

At S616, the CA management application sends a certificate storing request to the USIM interface library.

At S617, the USIM interface library forwards the certificate storing request to the USIM.

It is to be noted that after receiving the certificate application response message, the CA management application extracts the protected certificate application response message, writes the obtained ECA certificate into the USIM through a certificate storing request message, and returns a state of "certification application completed" to the user to prompt that the EC is applied successfully. It is to be noted that the certificate storing request message carries the protected certificate application response.

When receiving the certificate storing request message, the USIM performs the following process.

First, the USIM performs decryption and integrity verification on the certificate application response message using the one or more encryption keys Ks_NAFe and the one or more integrity protection keys Ks_NAFi. If the one or more encryption keys and the one or more integrity protection keys are not generated separately, the one or more session keys Ks_NAF are used to perform decryption and integrity verification on the message.

Second, the USIM parses a data packet and stores securely an ECA public key certificate in the data packet in secure environment of the USIM.

The USIM returns a certificate write response message to the CA management application.

At S610, the CA management application returns a state of "certificate stored securely" to the user to prompt that secure storage of the certificate is successful.

In the above solution, the sensitive security parameters and information involved, such as the key Ks_NAF, the cryptographic public and private key pair of the EC, and the one or more digital certificates, are generated, calculated, transmitted, and processed in secure environments (such as a local secure environment USIM of the terminal device and a GBA secure transmission communication channel between the terminal device and the ECA server), so the security of the initial security provisioning process of the V2X terminal device can be ensured.

At S618, the USIM sends the certificate write response to the USIM interface library.

At S619, the USIM interface library forwards the certificate write response to the CA management application.

At S620, the CA management application prompts a certificate application state.

It is to be noted that the embodiments of the present disclosure provide a method for securely implementing initial security provisioning of the V2X terminal device based on the GBA mechanism, which is able to ensure information security of the initial security provisioning and improve the security of message transmission.

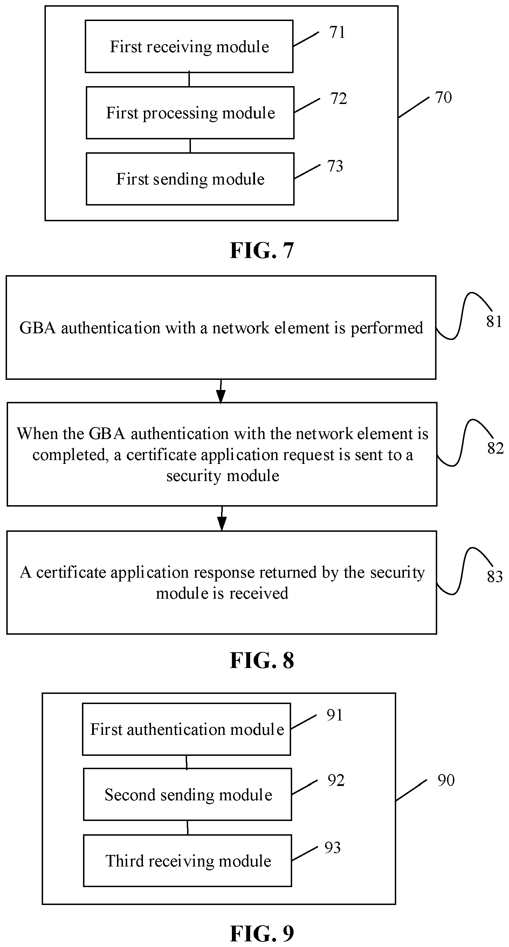

As shown in FIG. 7, a security module 70 in the embodiments of the present disclosure may include a first receiving module 71, a first processing module 72 and a first sending module 73.

The first receiving module 71 is configured to receive, when GBA authentication between a terminal device and a network element is completed, a certificate application request from the terminal device. The certificate application request carries identification information of the terminal device.

The first processing module 72 is configured to perform encryption and/or integrity protection on a certificate application request message based on one or more session keys negotiated by the GBA authentication.

The first sending module 73 is configured to return a certificate application response to the terminal device. The certificate application response carries the certificate application request message protected by encryption and/or integrity protection.

The security module is configured to implement the function of the USIM.

Optionally, the first processing module 72 is configured to:
when the one or more first keys are successfully generated based on the one or more session keys, perform encryption and/or integrity protection on the certificate application request message with the one or more first keys; or
when the one or more first keys are not generated based on the one or more session keys, perform encryption and/or integrity protection on the certificate application request message with the one or more session keys.

The one or more first keys include one or more encryption keys and/or one or more integrity protection keys.

Optionally, after the first sending module 73 returns the certificate application response to the terminal device, the security module may also include a second receiving module and a storage module.

The second receiving module is configured to receive a certificate storing request sent by the terminal device. The certificate storing request carries a certificate application response message protected by encryption and/or integrity protection, and the certificate application response message carries one or more digital certificates.

The storage module is configured to store the one or more digital certificates according to the certificate application response message.

Further, the storage module may include a first decrypting unit and a first storage unit.

The first decrypting unit is configured to verify and decrypt, when the one or more first keys are generated based on the one or more session keys negotiated by the GBA authentication, the certificate application response message with the one or more first keys.

The first storage unit is configured to parse the one or more digital certificates in the certificate application response message, and store the one or more digital certificates.

The one or more first keys include one or more encryption keys and/or one or more integrity protection keys.

Further, the storage module may include a second decrypting unit and a second storage unit.

The second decrypting unit is configured to verify and decrypt, when the one or more first keys are not generated based on the one or more session keys, the certificate application response message with the one or more session keys.

The second storage unit is configured to parse the one or more digital certificates in the certificate application response message, and store the one or more digital certificates.

The one or more first keys include one or more encryption keys and/or one or more integrity protection keys.

It is to be noted that the security module provided by the embodiments of the present disclosure can perform the initial security provisioning method mentioned above, so all implementation modes in the embodiments of the initial security provisioning method are applied to the security module and can achieve the same or similar beneficial effects.

The embodiments of the present disclosure also provide a security module, which may include a transceiver and a processor.

The processor is configured to:
when GBA authentication between a terminal device and a network element is completed, receive through the transceiver a certificate application request from the terminal device, the certificate application request carrying identification information of the terminal device; perform encryption and/or integrity protection on a certificate application request message based on one or more session keys negotiated by the GBA authentication; and return a certificate application response to the terminal device. The certificate application response carries the certificate application request message protected by encryption and/or integrity protection.

The security module is configured to implement the function of the USIM.

Optionally, when performing encryption and/or integrity protection on the certificate application request message based on the one or more session keys negotiated by the GBA authentication, the processor is configured to:
when one or more first keys are successfully generated based on the one or more session keys, perform encryption and/or integrity protection on the certificate application request message with the one or more first keys; or
when the one or more first keys are not generated based on the one or more session keys, perform encryption and/or integrity protection on the certificate application request message with the one or more session keys.

The one or more first keys include one or more encryption keys and/or one or more integrity protection keys.

Optionally, after returning the certificate application response to the terminal device, the processor is further configured to:
receive a certificate storing request sent by the terminal device, the certificate storing request carrying the certificate application response message protected by encryption and/or integrity protection, and the certificate application response message carrying one or more digital certificates; and
store the one or more digital certificates according to the certificate application response message.

Optionally, when storing the one or more digital certificates according to the certificate application response message, the processor is configured to:
when the one or more first keys are generated based on the one or more session keys negotiated by the GBA authentication, verify and decrypt the certificate application response message with the one or more first keys; and
parse the one or more digital certificates in the certificate application response message, and store the one or more digital certificates.

The one or more first keys include one or more encryption keys and/or one or more integrity protection keys.

Optionally, when storing the one or more digital certificates according to the certificate application response message, the processor is configured to:
when the one or more first keys are not generated based on the one or more session keys, verify and decrypt the certificate application response message with the one or more session keys; and
parse the one or more digital certificates in the certificate application response message, and store the one or more digital certificates.

The one or more first keys include one or more encryption keys and/or one or more integrity protection keys.

The embodiments of the present disclosure also provide a security module, which may include a memory, a processor and a computer program stored in the memory and capable of running on the processor. When executing the program, the processor implements each process in the above embodiments of the initial security provisioning method and can achieve the same technical effects. For avoiding repetitions, elaborations are omitted herein.

The embodiments of the present disclosure also provide a computer-readable storage medium, in which a computer program is stored. When executed by the processor, the program implements each process in the above embodiments of the initial security provisioning method and can achieve the same technical effects. For avoiding repetitions, elaborations are omitted herein. The computer-readable storage medium is a Read-Only Memory (ROM), a Random Access Memory (RAM), a magnetic disk or an optical disc, etc.

As shown in FIG. 8, the initial security provisioning method of the embodiments of the present disclosure is applicable to a terminal device, and may include the following operations.

At 81, GBA authentication with a network element is performed.

At 82, when the GBA authentication with the network element is completed, a certificate application request is sent to a security module. The certificate application request carries identification information of the terminal device.

At 83, a certificate application response returned by the security module is received. The certificate application response carries the certificate application request message protected by encryption and/or integrity protection.

Optionally, the specific implementation mode of the operation at 81 is as follows.

The modem of the terminal device calls the security module to perform the GBA authentication with the network element.

Optionally, after the operation at 83, the method may further include the following operations.

A certificate application message is sent to a CA server. The certificate application message carries the certificate application request message protected by encryption and/or integrity protection.

A certificate response message returned by the CA server is received. The certificate response message carries the certificate application response message protected by encryption and/or integrity protection, and the certificate application response message carries one or more digital certificates.

A certificate storing request is sent to the security module. The certificate storing request carries the certificate application response message protected by encryption and/or integrity protection.

It is to be noted that all descriptions about the terminal device in the above embodiments are applicable to the embodiments of the initial security provisioning method and can achieve the same technical effects.

As shown in FIG. 9, a terminal device 90 in the embodiments of the present disclosure may include a first authentication module 91, a second sending module 92 and a third receiving module 93.

The first authentication module 91 is configured to perform GBA authentication with a network element.

The second sending module 92 is configured to send, when the GBA authentication with the network element is completed, a certificate application request to a security module. The certificate application request carries identification information of the terminal device.

The third receiving module 93 is configured to receive a certificate application response returned by the security module. The certificate application response carries a certificate application request message protected by encryption and/or integrity protection.

Optionally, after the third receiving module 93 receives the certificate application response returned by the security module, the terminal device may also include: a third sending module, a fourth receiving module, a fourth sending module and a fifth receiving module.

The third sending module is configured to send a certificate application message to a CA server. The certificate application message carries the certificate application request message protected by encryption and/or integrity protection.

The fourth receiving module is configured to receive a certificate response message returned by the CA server. The certificate response message carries the certificate application response message protected by encryption and/or integrity protection, and the certificate application response message carries one or more digital certificates.

The fourth sending module is configured to send a certificate storing request to the security module. The certificate storing request carries the certificate application response message protected by encryption and/or integrity protection.

The fifth receiving module is configured to receive a certificate write response returned by the security module.

Optionally, the first authentication module 91 is configured for the modem of the terminal device to call the security module to perform the GBA authentication with the network element.

It is to be noted that the terminal device provided by the embodiments of the present disclosure can perform the initial security provisioning method mentioned above, so all implementation modes in the embodiments of the initial security provisioning method are applied to the terminal device and can achieve the same or similar beneficial effects.

The embodiments of the present disclosure also provide a terminal device, which may include a transceiver and a processor.

The processor is configured to perform GBA authentication with a network element.

The transceiver is configured to:
when the GBA authentication with the network element is completed, send a certificate application request to a security module, the certificate application request carrying identification information of the terminal device; and
receive a certificate application response returned by the security module, the certificate application response carrying a certificate application request message protected by encryption and/or integrity protection.

Optionally, after receiving the certificate application response returned by the security module, the transceiver is further configured to:
send a certificate application message to a CA server, the certificate application message carrying the certificate application request message protected by encryption and/or integrity protection;
receive a certificate response message returned by the CA server, the certificate response message carrying a certificate application response message protected by encryption and/or integrity protection, and the certificate application response message carrying one or more digital certificates; and
send a certificate storing request to the security module, the certificate storing request carrying the certificate application response message protected by encryption and/or integrity protection.

Optionally, when performing the GBA authentication with the network element, the processor is specifically configured for the modem of the terminal device to call the security module to perform the GBA authentication with the network element.

The embodiments of the present disclosure also provide a terminal device, which may include a memory, a processor and a computer program stored in the memory and capable of running on the processor. When executing the program, the processor implements each process in the above embodiments of the initial security provisioning method and can achieve the same technical effects. For avoiding repetitions, elaborations are omitted herein.

The embodiments of the present disclosure also provide a computer-readable storage medium, in which a computer program is stored. When executed by the processor, the program implements each process in the above embodiments of the initial security provisioning method and can achieve the same technical effects. For avoiding repetitions, elaborations are omitted herein. The computer-readable storage medium is an ROM, an RAM, a magnetic disk or an optical disc, etc.

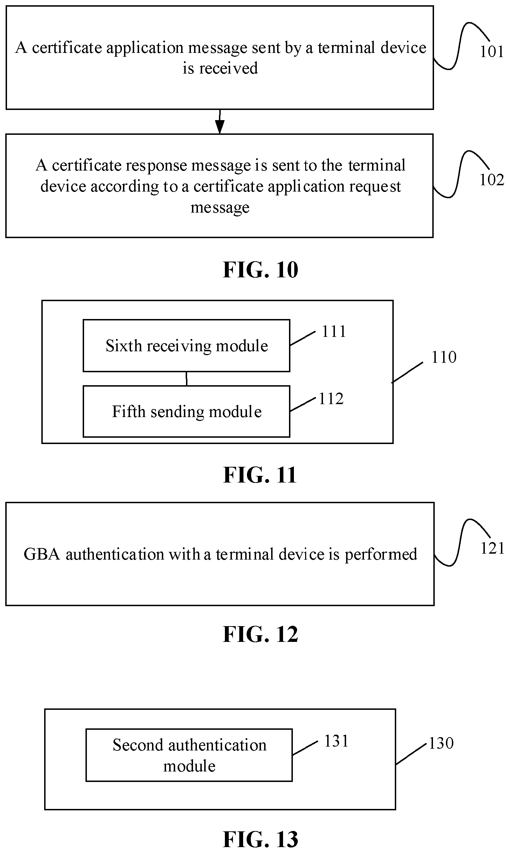

As shown in FIG. 10, the initial security provisioning method of the embodiments of the present disclosure is applicable to a CA server, and may include the following operations.

At 101, a certificate application message sent by a terminal device is received. The certificate application message carries a certificate application request message protected by encryption and/or integrity protection.

At 102, a certificate response message is sent to the terminal device according to the certificate application request message. The certificate response message carries a certificate application response message protected by encryption and/or integrity protection, and the certificate application response message carries one or more digital certificates.

Optionally, the specific implementation mode of the operation at 102 is as follows.

One or more session keys and user information are obtained from a network element.

The certificate application request message is verified and decrypted based on the one or more session keys.

The certificate application response message is generated.

Encryption and/or integrity protection is performed on the certificate application response message based on the one or more session keys.

The certificate response message is sent to the terminal device. The certificate response message carries the certificate application response message protected by encryption and/or integrity protection.

Specifically, the operation that the certificate application request message is verified and decrypted based on the one or more session keys includes the following.

When one or more second keys are generated successfully according to the one or more session keys, the certificate application request message is verified and decrypted with the one or more second keys.

Alternatively, when the one or more second keys are not generated according to the one or more session keys, the certificate application request message is verified and decrypted with the one or more session keys.

The one or more second keys include one or more encryption keys and/or one or more integrity protection keys.

Specifically, the operation that encryption and/or integrity protection is performed on the certificate application response message based on the one or more session keys includes the following.

When the one or more second keys are successfully generated based on the one or more session keys, encryption and/or integrity protection is performed on the certificate application response message with the one or more second keys.

Alternatively, when the one or more second keys are not generated according to the one or more session keys, the certificate application request message is verified and decrypted with the one or more session keys.

The one or more second keys include one or more encryption keys and/or one or more integrity protection keys.

It is to be noted that all descriptions about the CA server in the above embodiments are applicable to the embodiments of the initial security provisioning method and can achieve the same technical effects.

As shown in FIG. 11, a CA server 110 in the embodiments of the present disclosure may include a sixth receiving module 111 and a fifth sending module 112.

The sixth receiving module 111 is configured to receive a certificate application message sent by a terminal device. The certificate application message carries a certificate application request message protected by encryption and/or integrity protection.

The fifth sending module 112 is configured to send a certificate response message to the terminal device according to the certificate application request message. The certificate response message carries a certificate application response message protected by encryption and/or integrity protection, and the certificate application response message carries one or more digital certificates.

Optionally, the fifth sending module 112 includes: an obtaining unit, a third decrypting unit, a first generating unit, a first processing unit and a first sending unit.

The obtaining unit is configured to obtain one or more session keys and user information from the network element.

The third decrypting unit is configured to verify and decrypt the certificate application request message based on the one or more session keys.

The first generating unit is configured to generate the certificate application response message.

The first processing unit is configured to perform encryption and/or integrity protection on the certificate application response message based on the one or more session keys.

The first sending unit is configured to send the certificate response message to the terminal device. The certificate response message carries the certificate application response message protected by encryption and/or integrity protection.

Further, the third decrypting unit is configured to:
when one or more second keys are generated successfully according to the one or more session keys, verify and decrypt the certificate application request message with the one or more second keys; or
when the one or more second keys are not generated according to the one or more session keys, verify and decrypt the certificate application request message with the one or more session keys.

The one or more second keys include one or more encryption keys and/or one or more integrity protection keys.

Further, the first processing unit is configured to:
when the one or more second keys are successfully generated based on the one or more session keys, encryption and/or integrity protection is performed on the certificate application response message with the one or more second keys; or
when the one or more second keys are not generated according to the one or more session keys, the certificate application request message is verified and decrypted with the one or more session keys.

The one or more second keys include one or more encryption keys and/or one or more integrity protection keys.

It is to be noted that the CA server provided by the embodiments of the present disclosure is a CA server that can perform the initial security provisioning method mentioned above, so all implementation modes in the embodiments of the initial security provisioning method are applicable to the CA server and can achieve the same or similar beneficial effects.

The embodiments of the present disclosure also provide a CA server, which may include a transceiver and a processor.

The transceiver is configured to:
receive a certificate application message sent by a terminal device, the certificate application message carrying a certificate application request message protected by encryption and/or integrity protection; and
send a certificate response message to the terminal device according to the certificate application request message, the certificate response message carrying a certificate application response message protected by encryption and/or integrity protection, and the certificate application response message carrying one or more digital certificates.

Optionally, the processor is specifically configured to: obtain one or more session keys and user information from the network element; verify and decrypt the certificate application request message based on the one or more session keys; generate the certificate application response message; perform encryption and/or integrity protection on the certificate application response message based on the one or more session keys; and send the certificate response message to the terminal device, the certificate response message carrying the certificate application response message protected by encryption and/or integrity protection.

Further, when verifying and decrypting the certificate application request message based on the one or more session keys, the processor is configured to:
when the one or more second keys are generated successfully according to the one or more session keys, verify and decrypt the certificate application request message with the one or more second keys; or
when the one or more second keys are not generated according to the one or more session keys, verify and decrypt the certificate application request message with the one or more session keys.

The one or more second keys include one or more encryption keys and/or one or more integrity protection keys.

Further, when performing encryption and/or integrity protection on the certificate application response message based on the one or more session keys, the processor is configured to:
when the one or more second keys are successfully generated based on the one or more session keys, perform encryption and/or integrity protection on the certificate application response message with the one or more second keys; or
when the one or more second keys are not generated according to the one or more session keys, verify and decrypt the certificate application request message with the one or more session keys.

The one or more second keys include one or more encryption keys and/or one or more integrity protection keys.

The embodiments of the present disclosure also provide a CA server, which may include a memory, a processor and a computer program stored in the memory and capable of running on the processor. When executing the program, the processor implements each process in the above embodiments of the initial security provisioning method and can achieve the same technical effects. For avoiding repetitions, elaborations are omitted herein.

The embodiments of the present disclosure also provide a computer-readable storage medium, in which a computer program is stored. When executed by the processor, the program implements each process in the above embodiments of the initial security provisioning method and can achieve the same technical effects. For avoiding repetitions, elaborations are omitted herein. The computer-readable storage medium is an ROM, an RAM, a magnetic disk or an optical disc, etc.

As shown in FIG. 12, the initial security provisioning method of the embodiments of the present disclosure is applicable to a network element, and may include the following operation.

At 121, GBA authentication with a terminal device is performed.

Optionally, after the operation at 121, the method may further include the following.

One or more session keys and user information are sent to a CA server.

It is to be noted that all descriptions about the network element in the above embodiments are applicable to the embodiments of the initial security provisioning method and can achieve the same technical effects.

As shown in FIG. 13, a network element 130 in the embodiments of the present disclosure may include a second authentication module 131.

The second authentication module 131 is configured to perform GBA authentication with a terminal device.

Optionally, the network element 130 may also include a sixth sending module.

The sixth sending module is configured to send one or more session keys and user information to a CA server.

It is to be noted that the network element provided by the embodiments of the present disclosure is a network element that can perform the initial security provisioning method mentioned above, so all implementation modes in the embodiments of the initial security provisioning method are applied to the network element and can achieve the same or similar beneficial effects.

The embodiments of the present disclosure also provide a network element, which may include a transceiver and a processor.

The processor is configured to perform GBA authentication with a terminal device.

Optionally, the transceiver is configured to send one or more session keys and user information to a CA server.

The embodiments of the present disclosure also provide a network element, which may include a memory, a processor and a computer program stored in the memory and capable of running on the processor. When executing the program, the processor implements each process in the above embodiments of the initial security provisioning method and can achieve the same technical effects. For avoiding repetitions, elaborations are omitted herein.

The embodiments of the present disclosure also provide a computer-readable storage medium, in which a computer program is stored. When executed by the processor, the program implements each process in the above embodiments of the initial security provisioning method and can achieve the same technical effects. For avoiding repetitions, elaborations are omitted herein. The computer-readable storage medium is a Read-Only Memory (ROM), a Random Access Memory (RAM), a magnetic disk or an optical disc, etc.

Those skilled in the art should understand that the embodiments of the present application may be provided as a method, a system or a computer program product. Thus, the present application may adopt forms of complete hardware embodiments, complete software embodiments or embodiments in combined with software and hardware. Moreover, the present application may adopt the form of a computer program product implemented on one or more computer readable storage media (including, but not limited to, a disk memory and an optical memory) containing computer executable program codes.

The present application is described with reference to flowcharts and/or block diagrams of the method, the device (system) and the computer program product according to the embodiments of the present application. It is to be understood that each flow and/or block in the flowcharts and/or the block diagrams and combinations of the flows and/or blocks in the flowcharts and/or the block diagrams may be implemented by computer program instructions. These computer program instructions can be provided to a processor of a general computer, a dedicate computer, an embedded processor or other programmable data processing devices to generate a machine, so that instructions executed by the processor of the computer or other programmable data processing devices generate a device that is used for implementing the specified functions in one or more flows of the flowchart and/or one or more blocks of the block diagram.

These computer program instructions may also be stored in the computer-readable storage medium which can guide the computer or other programmable data processing devices to work in a particular way, so that the instructions stored in the computer-readable storage medium generate a product including an instruction device. The instruction device implements the specified functions in one or more flows of the flowchart and/or one or more blocks of the block diagram.

These computer program instructions may also be loaded on the computer or other programmable data processing devices, so that a series of operations are performed on the computer or other programmable data processing devices to generate the processing implemented by the computer, and the instructions executed on the computer or other programmable data processing devices provide the operations for implementing the specified functions in one or more flows of the flowchart and/or one or more blocks of the block diagram.

It should be understood that division of the above modules is only logical function division, and these modules may be fully or partially integrated on a physical entity or separated physically in practical implementation. These modules may all be implemented in the form of software called by a processing element or in the form of hardware; or, part of the modules may be implemented in the form of software called by a processing element, and part of the modules may be implemented in the form of hardware. For example, the determining module may be a separate processing element, and may also be integrated into a chip of the device; moreover, the determining module may also be stored in the memory of the device in the form of program codes, and the function of the determining module is called and executed by a processing element of the device. The implementation of other modules is similar. In addition, all or part of these modules may be integrated or implemented independently. The processing element here may be an integrated circuit with a signal processing capability. In an implementation process, the above operations of the method or modules may be accomplished by an integrated logic circuit of hardware in the processing element or an instruction in a software form.

For example, modules, units, subunits or sub-modules may be one or more integrated circuits configured to implement the above method, for example, one or more Application Specific Integrated Circuits (ASICs), or one or more Digital Signal Processors (DSPs), or one or more Field Programmable Gate Arrays (FPGAs), etc. For another example, when one of the above modules is implemented by the processing element calling the program codes, the processing element may be a general processor, such as a Central Processing Unit (CPU), or other processors that may call the program codes. For another example, these modules may be integrated together in the form of System-On-a-Chip (SOC).

Terms "first", "second" and the like in the specification and claims of the present disclosure are used to distinguish similar objects and do not have to describe a specific sequence or order. It should be understood that the objects may be exchanged under appropriate circumstances, so that the embodiments of the present disclosure described here are implemented, for example, in an order different from that described or shown herein. In addition, terms "include" and "have" and any variations thereof are intended to cover non-exclusive inclusions. For example, processes, methods, systems, products or devices containing a series of operations or units are not limited to these operations or units listed clearly, and may include other operations or units which are not clearly listed or are inherent to these processes, methods, products or devices instead. In addition, term "and/or" is used in the specification and claims to indicate at least one of the connected objects. For example, A and/or B and/or C indicates seven cases, that is, independent existence of A, independent existence of B, independent existence of C, existence of both A and B, existence of both B and C, existence of both A and C, and existence of A, B, and C all. Similarly, "at least one of A and B" in the specification and claims should be understood as "independent existence of A, independent existence of B, or existence of both A and B".

The above is the optional implementation modes of the disclosure. It is to be pointed out that those of ordinary skill in the art may make several modifications and improvements without departing from the principle of the disclosure, and these modifications and improvements shall fall within the scope of protection of the disclosure.

## Claims

1. An initial security provisioning method, applicable to a security module, the method comprising:
when Generic Bootstrapping Architecture, GBA, authentication between a terminal device and a network element is completed, receiving (41) a certificate application request from the terminal device, the certificate application request carrying identification information of the terminal device;
comprising:
performing (42) encryption and/or integrity protection on a certificate application request message based on one or more session keys negotiated by the GBA authentication between the terminal and the network element;
returning (43) the certificate application request message protected by encryption and/or integrity protection to the terminal device;
wherein the security module is used to implement a function of a Universal Subscriber Identity Module, USIM, of the terminal device.

2. The initial security provisioning method of claim 1, wherein performing (42) encryption and/or integrity protection on the certificate application request message based on the one or more session keys negotiated by the GBA authentication between the terminal and the network element comprises:
in the case that one or more first keys are successfully generated based on the one or more session keys, performing encryption and/or integrity protection on the certificate application request message with the one or more first keys; or
in the case that the one or more first keys are not generated based on the one or more session keys, performing encryption and/or integrity protection on the certificate application request message with the one or more session keys;
wherein the one or more first keys comprise one or more encryption keys and/or one or more integrity protection keys.

3. The initial security provisioning method of claim 1 or 2, wherein after returning the certificate application request message protected by encryption and/or integrity protection to the terminal device, the method further comprises:
receiving a certificate storing request sent by the terminal device, the certificate storing request carrying a certificate application response message protected by encryption and/or integrity protection, and the certificate application response message carrying one or more digital certificates; and
storing the one or more digital certificates according to the certificate application response message.

4. The initial security provisioning method of claim 3, wherein storing the one or more digital certificates according to the certificate application response message comprises:
when the one or more first keys are generated based on the one or more session keys negotiated by the GBA authentication, verifying and decrypting the certificate application response message with the one or more first keys; and
obtaining the one or more digital certificates from the certificate application response message, and storing the one or more digital certificates;
wherein the one or more first keys comprise one or more encryption keys and/or one or more integrity protection keys.

5. The initial security provisioning method of claim 3, wherein storing the one or more digital certificates according to the certificate application response message comprises:
when the one or more first keys are not generated based on the one or more session keys, verifying and decrypting the certificate application response message with the one or more session keys; and
obtaining the one or more digital certificates from the certificate application response message, and storing the one or more digital certificates;
wherein the one or more first keys comprise one or more encryption keys and/or one or more integrity protection keys.

6. An initial security provisioning method, applicable to a terminal device, the method comprising:
performing (81) Generic Bootstrapping Architecture, GBA, authentication with a network element;
**characterized by**,
when the GBA authentication with the network element is completed, sending (82) a certificate application request to a security module, to enable the security module to perform encryption and/or integrity protection on a certificate application request message based on one or more session keys negotiated by the GBA authentication between the terminal and the network element, the certificate application request carrying identification information of the terminal device;
receiving (83) the certificate application request message protected by encryption and/or integrity protection returned by the security module;
wherein the security module is used to implement a function of a Universal Subscriber Identity Module, USIM, of the terminal device.

7. The initial security provisioning method of claim 6, wherein after receiving (83) the certificate application request message returned by the security module, the method further comprises:
sending a certificate application message to a Certificate Authority, CA, server, the certificate application message carrying the certificate application request message protected by encryption and/or integrity protection;
receiving a certificate response message returned by the CA server, the certificate response message carrying a certificate application response message protected by encryption and/or integrity protection, and the certificate application response message carrying one or more digital certificates; and
sending a certificate storing request to the security module, the certificate storing request carrying the certificate application response message protected by encryption and/or integrity protection.

8. The initial security provisioning method of claim 6 or 7, wherein performing (81) the GBA authentication with the network element comprises:
calling, by a modem of the terminal device, the security module to perform the GBA authentication with the network element.

9. A security module (70), comprising:
a first receiving module (71), configured to receive, when Generic Bootstrapping Architecture, GBA, authentication between a terminal device and a network element is completed, a certificate application request from the terminal device, the certificate application request carrying identification information of the terminal device;
a first processing module (72), configured to perform encryption and/or integrity protection on a certificate application request message based on one or more session keys negotiated by the GBA authentication between the terminal and the network element;
a first sending module (73), configured to return the certificate application request message protected by encryption and/or integrity protection to the terminal device;
wherein the security module is used to implement a function of a Universal Subscriber Identity Module, USIM, of the terminal device.

10. A terminal device (90), comprising:
a first authentication module (91), configured to perform Generic Bootstrapping Architecture, GBA, authentication with a network element;
a second sending module (92), configured to send, when the GBA authentication with the network element is completed, a certificate application request to a security module, to enable the security module to perform encryption and/or integrity protection on a certificate application request message based on one or more session keys negotiated by the GBA authentication between the terminal and the network element, the certificate application request carrying identification information of the terminal device, wherein the security module is used to implement a function of a Universal Subscriber Identity Module, USIM, of the terminal device; and
a third receiving module (93), configured to receive the certificate application request message protected by encryption and/or integrity protection returned by the security module.

11. A computer-readable storage medium, having stored a computer program thereon, wherein the computer program, when executed by a processor, implements operations of the initial security provisioning method of any one of claims 1 to 8.

## Patentansprüche

1. Einleitendes Sicherheitsbereitstellungsverfahren, das auf ein Sicherheitsmodul anwendbar ist, wobei das Verfahren umfasst:
wenn die Generic Bootstrapping Architecture-Identifizierung(GBA-Identifizierung) zwischen einem Endgerät und einem Netzwerkelement abgeschlossen ist, Empfangen (41) einer Zertifikatsanwendungsanforderung von dem Endgerät, wobei die Zertifikatsanwendungsanforderung Identifikationsinformationen des Endgeräts trägt;
umfassend:
Durchführen (42) einer Verschlüsselung und/oder eines Integritätsschutzes an einer Zertifikatsanwendungsanforderungsnachricht basierend auf einem oder mehreren durch die GBA-Authentifizierung zwischen dem Endgerät und dem Netzwerkelement ausgehandelten Sitzungsschlüssel;
Zurückgeben (43) der durch Verschlüsselung und/oder Integritätsschutz geschützten Zertifikatsantragsanforderungsnachricht an das Endgerät;
wobei das Sicherheitsmodul zum Implementieren einer Funktion eines Universal Subscriber Identity Module (USIM) des Endgeräts verwendet wird.

2. Einleitendes Sicherheitsbereitstellungsverfahren nach Anspruch 1, wobei das Durchführen (42) einer Verschlüsselung und/oder eines Integritätsschutzes an der Zertifikatsanwendungsanforderungsnachricht basierend auf dem einen oder den mehreren durch die GBA-Authentifizierung zwischen dem Endgerät und dem Netzwerkelement ausgehandelten Sitzungsschlüsseln umfasst:
in dem Fall, dass ein oder mehrere erste Schlüssel erfolgreich basierend auf dem einen oder den mehreren Sitzungsschlüsseln generiert werden, Durchführen einer Verschlüsselung und/oder eines Integritätsschutzes an der Zertifikatsantragsanforderungsnachricht mit dem einen oder den mehreren ersten Schlüsseln; oder
in dem Fall, dass der eine oder die mehreren ersten Schlüssel nicht basierend auf dem einen oder den mehreren Sitzungsschlüsseln generiert werden, Durchführen einer Verschlüsselung und/oder eines Integritätsschutzes an der Zertifikatsantragsanforderungsnachricht mit dem einen oder den mehreren Sitzungsschlüsseln;
wobei der eine oder die mehreren ersten Schlüssel einen oder mehrere Verschlüsselungsschlüssel und/oder einen oder mehrere Integritätsschutzschlüssel umfassen.

3. Einleitendes Sicherheitsbereitstellungsverfahren nach Anspruch 1 oder 2, wobei das Verfahren nach der Rückgabe der durch Verschlüsselung und/oder Integritätsschutz geschützten Zertifikatsanwendungsanforderungsnachricht an das Endgerät ferner umfasst:
Empfangen einer vom Endgerät gesendeten Zertifikatsspeicherungsanforderung, wobei die Zertifikatsspeicherungsanforderung eine durch Verschlüsselung und/oder Integritätsschutz geschützte Zertifikatsanwendungsantwortnachricht trägt, und die Zertifikatsanwendungsantwortnachricht ein oder mehrere digitale Zertifikate trägt; und
Speichern des einen oder der mehreren digitalen Zertifikate gemäß der Zertifikatsanwendungsantwortnachricht.

4. Einleitendes Sicherheitsbereitstellungsverfahren nach Anspruch 3, wobei das Speichern des einen oder der mehreren digitalen Zertifikate gemäß der Zertifikatsanwendungsantwortnachricht umfasst:
wenn der eine oder die mehreren ersten Schlüssel basierend auf dem einen oder den mehreren durch die GBA-Authentifizierung ausgehandelten Sitzungsschlüsseln generiert werden, Verifizieren und Entschlüsseln der Zertifikatsanwendungsantwortnachricht mit dem einen oder den mehreren ersten Schlüsseln; und
Erhalten des einen oder der mehreren digitalen Zertifikate aus der Zertifikatsanwendungsantwortnachricht, und Speichern des einen oder der mehreren digitalen Zertifikate;
wobei der eine oder die mehreren ersten Schlüssel einen oder mehrere Verschlüsselungsschlüssel und/oder einen oder mehrere Integritätsschutzschlüssel umfassen.

5. Einleitendes Sicherheitsbereitstellungsverfahren nach Anspruch 3, wobei das Speichern des einen oder der mehreren digitalen Zertifikate gemäß der Zertifikatsanwendungsantwortnachricht umfasst:
wenn der eine oder die mehreren ersten Schlüssel nicht basierend auf dem einen oder den mehreren Sitzungsschlüsseln generiert werden, Verifizieren und Entschlüsseln der Antwortnachricht der Zertifikatsanwendung mit dem einen oder den mehreren Sitzungsschlüsseln; und
Erhalten des einen oder der mehreren digitalen Zertifikate aus der Zertifikatsanwendungsantwortnachricht, und Speichern des einen oder der mehreren digitalen Zertifikate;
wobei der eine oder die mehreren ersten Schlüssel einen oder mehrere Verschlüsselungsschlüssel und/oder einen oder mehrere Integritätsschutzschlüssel umfassen.

6. Einleitendes Sicherheitsbereitstellungsverfahren, das auf ein Endgerät anwendbar ist, wobei das Verfahren umfasst:
Durchführen (81) einer Generic Bootstrapping Architecture-Authentifizierung (GBA-Authentifizierung) mit einem Netzwerkelement;
**gekennzeichnet durch**,
wenn die GBA-Authentifizierung mit dem Netzwerkelement abgeschlossen ist, Senden (82) einer Zertifikatsanwendungsanforderung an ein Sicherheitsmodul, um es dem Sicherheitsmodul zu ermöglichen, eine Verschlüsselung und/oder einen Integritätsschutz an einer Zertifikatsanwendungsanforderungsnachricht basierend auf einem oder mehreren Sitzungsschlüsseln durchzuführen, die durch die GBA-Authentifizierung zwischen dem Endgerät und dem Netzwerkelement ausgehandelt wurden, wobei die Zertifikatsanwendungsanforderung Identifikationsinformationen des Endgeräts trägt;
Empfangen (83) der durch Verschlüsselung und/oder Integritätsschutz geschützten Zertifikatsanwendungsanforderungsnachricht, die vom Sicherheitsmodul zurückgegeben wird;
wobei das Sicherheitsmodul zum Implementieren einer Funktion eines Universal Subscriber Identity Module (USIM) des Endgeräts verwendet wird.

7. Einleitendes Sicherheitsbereitstellungsverfahren nach Anspruch 6, wobei das Verfahren nach dem Empfangen (83) der vom Sicherheitsmodul zurückgegebenen Zertifikatsanwendungsanforderungsnachricht ferner umfasst:
Senden einer Zertifikatsanforderungsnachricht an einen Zertifizierungsstellen-Server (Certificate Authority-Server, CA-Server), wobei die Zertifikatsanwendungsnachricht die durch Verschlüsselung und/oder Integritätsschutz geschützte Zertifikatsanwendungsanforderungsnachricht trägt;
Empfangen einer vom CA-Server zurückgegebenen Zertifikatsantwortnachricht, wobei die Zertifikatsantwortnachricht eine durch Verschlüsselung und/oder Integritätsschutz geschützte Zertifikatsanwendungsantwortnachricht trägt, und die Zertifikatsanwendungsantwortnachricht ein oder mehrere digitale Zertifikate trägt; und
Senden einer Zertifikatspeicherungsanforderung an das Sicherheitsmodul, wobei die Zertifikatspeicherungsanforderung die durch Verschlüsselung und/oder Integritätsschutz geschützte Zertifikatsanwendungsantwortnachricht trägt.

8. Einleitendes Sicherheitsbereitstellungsverfahren nach Anspruch 6 oder 7, wobei das Durchführen (81) der GBA-Authentifizierung mit dem Netzwerkelement umfasst:
Anrufen des Sicherheitsmoduls durch ein Modem des Endgeräts, um die GBA-Authentifizierung mit dem Netzwerkelement durchzuführen.

9. Sicherheitsmodul (70), umfassend:
ein erstes Empfangsmodul (71), das konfiguriert ist, um nach Abschluss der Generic Bootstrapping Architecture-Authentifizierung (GBA-Authentifizierung) zwischen einem Endgerät und einem Netzwerkelement eine Zertifikatsanwendungsanforderung von dem Endgerät zu empfangen, wobei die Zertifikatsanwendungsanforderung Identifikationsinformationen des Endgeräts trägt;
ein erstes Verarbeitungsmodul (72), das konfiguriert ist, um eine Verschlüsselung und/oder einen Integritätsschutz an einer Zertifikatsanwendungsanforderungsnachricht basierend auf einem oder mehreren durch die GBA-Authentifizierung zwischen dem Endgerät und dem Netzwerkelement ausgehandelten Sitzungsschlüsseln durchzuführen;
ein erstes Sendemodul (73), das konfiguriert ist, um die durch Verschlüsselung und/oder Integritätsschutz geschützte Zertifikatsanwendungsanforderungsnachricht an das Endgerät zurückzugeben;
wobei das Sicherheitsmodul zum Implementieren einer Funktion eines Universal Subscriber Identity Module (USIM) des Endgeräts verwendet wird.

10. Endgerät (90), umfassend:
ein erstes Authentifizierungsmodul (91), das konfiguriert ist, um eine Generic Bootstrapping Architecture-Authentifizierung (GBA-Authentifizierung) mit einem Netzwerkelement durchzuführen;
ein zweites Sendemodul (92), das konfiguriert ist, um nach Abschluss der GBA-Authentifizierung mit dem Netzwerkelement eine Zertifikatsanwendungsanforderung an ein Sicherheitsmodul zu senden, um es dem Sicherheitsmodul zu ermöglichen, eine Verschlüsselung und/oder einen Integritätsschutz an einer Zertifikatsanwendungsanforderungsnachricht basierend auf einem oder mehreren Sitzungsschlüsseln durchzuführen, die durch die GBA-Authentifizierung zwischen dem Endgerät und dem Netzwerkelement ausgehandelt wurden, wobei die Zertifikatsanwendungsanforderung Identifikationsinformationen des Endgeräts trägt, wobei das Sicherheitsmodul verwendet wird, um eine Funktion eines Universal Subscriber Identity Module (USIM) des Endgeräts zu implementieren; und
ein drittes Empfangsmodul (93), das konfiguriert ist, um die durch Verschlüsselung und/oder Integritätsschutz geschützte Zertifikatsanwendungsanforderungsnachricht, die vom Sicherheitsmodul zurückgegeben wird, zu empfangen.

11. Computerlesbares Speicherungsmedium, auf dem ein Computerprogramm gespeichert ist, wobei das Computerprogramm, wenn es von einem Prozessor ausgeführt wird, Vorgänge des einleitenden Sicherheitsbereitstellungsverfahrens nach einem der Ansprüche 1 bis 8 implementiert.

## Revendications

1. Procédé de provisionnement de sécurité initial, applicable à un module de sécurité, le procédé comprenant :
lorsqu'une authentification d'architecture générique d'amorçage (authentification GBA) entre un dispositif terminal et un élément de réseau est achevée, une réception (41) d'une demande d'application de certificat en provenance du dispositif terminal, la demande d'application de certificat comportant des informations d'identification du dispositif terminal ;
comprenant :
une réalisation (42) d'un chiffrement et/ou d'une protection d'intégrité sur un message de demande d'application de certificat sur la base d'une ou plusieurs clés de session négociées par l'authentification GBA entre le terminal et l'élément de réseau ;
un renvoi (43) du message de demande d'application de certificat protégé par chiffrement et/ou protection d'intégrité au dispositif terminal ;
le module de sécurité étant utilisé pour mettre en oeuvre une fonction d'un module d'identité d'abonné universel (USIM) du dispositif terminal.

2. Procédé de provisionnement de sécurité initial selon la revendication 1, dans lequel la réalisation (42) du chiffrement et/ou de la protection d'intégrité sur le message de demande d'application de certificat basé sur une ou plusieurs clés de session négociées par l'authentification GBA entre le terminal et l'élément de réseau comprend :
dans le cas où une ou plusieurs premières clés sont générées avec succès sur la base du ou des clés de session, réaliser le chiffrement et/ou la protection d'intégrité sur le message de demande d'application de certificat avec la ou les premières clés ; ou
dans le cas où la ou les premières clés ne sont pas générées sur la base de la ou des clés de session, réaliser le chiffrement et/ou la protection d'intégrité sur le message de demande d'application de certificat avec la ou les clés de session ;
la ou les premières clés comprenant une ou plusieurs clés de chiffrement et/ou une ou plusieurs clés de protection d'intégrité.

3. Procédé de provisionnement de sécurité initial selon la revendication 1 ou 2, dans lequel, après avoir renvoyé le message de demande d'application de certificat protégé par chiffrement et/ou protection d'intégrité au dispositif terminal, le procédé comprend en outre :
la réception d'une demande de stockage de certificat envoyée par le dispositif terminal, la demande de stockage de certificat portant un message de réponse d'application de certificat protégé par chiffrement et/ou protection d'intégrité, et le message de réponse d'application de certificat portant un ou plusieurs certificats numériques ; et
le stockage d'un ou plusieurs certificats numériques selon le message de réponse d'application de certificat.

4. Procédé de provisionnement de sécurité initial selon la revendication 3, dans lequel le stockage d'un ou plusieurs certificats numériques selon le message de réponse d'application de certificat comprend :
lorsque la ou les premières clés sont générées sur la base de la ou des clés de session négociées par l'authentification GBA, vérifier et décrypter le message de réponse d'application de certificat avec la ou les premières clés ; et
obtenir un ou plusieurs certificats numériques à partir du message de réponse d'application de certificat, et stocker le ou les certificats numériques ;
la ou les premières clés comprenant une ou plusieurs clés de chiffrement et/ou une ou plusieurs clés de protection d'intégrité.

5. Procédé de provisionnement de sécurité initial selon la revendication 3, dans lequel le stockage d'un ou plusieurs certificats numériques selon le message de réponse d'application de certificat comprend :
lorsque la ou les premières clés ne sont pas générées sur la base de la ou des clés de session, vérifier et décrypter le message de réponse d'application de certificat avec la ou les clés de session ; et
obtenir un ou plusieurs certificats numériques à partir du message de réponse d'application de certificat, et stocker le ou les certificats numériques ;
la ou les premières clés comprenant une ou plusieurs clés de chiffrement et/ou une ou plusieurs clés de protection d'intégrité.

6. Procédé de provisionnement de sécurité initial, applicable à un dispositif terminal, le procédé comprenant :
une réalisation (81) d'une authentification d'architecture d'amorçage générique (authentification GBA) avec un élément de réseau ;
**caractérisé par**,
lorsque l'authentification GBA avec l'élément de réseau est achevée, l'envoi (82) d'une demande d'application de certificat à un module de sécurité, afin de permettre au module de sécurité de réaliser un chiffrement et/ou une protection d'intégrité sur un message de demande d'application de certificat sur la base d'une ou plusieurs clés de session négociées par l'authentification GBA entre le terminal et l'élément de réseau, la demande d'application de certificat comportant des informations d'identification du dispositif terminal ;
une réception (83) du message de demande d'application de certificat protégé par chiffrement et/ou protection d'intégrité renvoyé par le module de sécurité ;
le module de sécurité étant utilisé pour mettre en oeuvre une fonction d'un module d'identité d'abonné universel (USIM) du dispositif terminal.

7. Procédé de provisionnement initial de sécurité selon la revendication 6, dans lequel, après avoir reçu (83) le message de demande d'application de certificat renvoyé par le module de sécurité, le procédé comprend en outre :
un envoi d'un message d'application de certificat à un serveur d'autorité de certification (serveur CA), le message d'application de certificat portant le message de demande d'application de certificat protégé par chiffrement et/ou protection d'intégrité ;
une réception d'un message de réponse de certificat renvoyé par le serveur CA, le message de réponse de certificat portant un message de réponse d'application de certificat protégé par chiffrement et/ou protection d'intégrité, et le message de réponse d'application de certificat portant un ou plusieurs certificats numériques ; et
un envoi d'une demande de stockage de certificat au module de sécurité, la demande de stockage de certificat portant le message de réponse de demande de certificat protégé par chiffrement et/ou protection d'intégrité.

8. Procédé de provisionnement de sécurité initial selon la revendication 6 ou 7, dans lequel la réalisation (81) de l'authentification GBA avec l'élément de réseau comprend :
l'appel, par un modem du dispositif terminal, le module de sécurité pour effectuer l'authentification GBA avec l'élément de réseau.

9. Module de sécurité (70), comprenant :
un premier module de réception (71), configuré pour recevoir, lorsqu'une authentification de l'architecture générique d'amorçage (authentification GBA) entre un dispositif terminal et un élément de réseau est achevée, une demande d'application de certificat en provenance du dispositif terminal, la demande d'application de certificat comportant des informations d'identification du dispositif terminal ;
un premier module de traitement (72), configuré pour réaliser le chiffrement et/ou la protection d'intégrité sur un message de demande d'application de certificat sur la base d'une ou plusieurs clés de session négociées par l'authentification GBA entre le terminal et l'élément de réseau ;
un premier module d'envoi (73), configuré pour renvoyer le message de demande d'application de certificat protégé par chiffrement et/ou protection d'intégrité au dispositif terminal ;
le module de sécurité étant utilisé pour mettre en oeuvre une fonction d'un module d'identité d'abonné universel (USIM) du dispositif terminal.

10. Dispositif terminal (90), comprenant :
un premier module d'authentification (91), configuré pour réaliser une authentification d'une architecture générique d'amorçage (authentification GBA) avec un élément de réseau ;
un second module d'envoi (92), configuré pour envoyer, lorsque l'authentification GBA avec l'élément de réseau est achevée, une demande d'application de certificat à un module de sécurité, pour permettre au module de sécurité d'effectuer le cryptage et/ou la protection d'intégrité sur un message de demande d'application de certificat sur la base d'une ou plusieurs clés de session négociées par l'authentification GBA entre le terminal et l'élément de réseau, la demande d'application de certificat portant des informations d'identification du dispositif terminal, dans lequel le module de sécurité est utilisé pour mettre en oeuvre une fonction d'un module d'identité d'abonné universel (USIM) du dispositif terminal ; et
un troisième module de réception (93), configuré pour recevoir le message de demande d'application de certificat protégé par chiffrement et/ou protection d'intégrité renvoyé par le module de sécurité.

11. Support de stockage lisible par ordinateur, sur lequel est stocké un programme d'ordinateur, dans lequel le programme d'ordinateur, lorsqu'il est exécuté par un processeur, met en oeuvre les opérations du procédé de provisionnement de sécurité initial selon l'une quelconque des revendications 1 à 8.
